(19) Europäisches Patentamt
European Patent Office
Office européen des brevets

(11) **EP 3 296 829 A1**

(12) **EUROPEAN PATENT APPLICATION**

(43) Date of publication:
**21.03.2018 Bulletin 2018/12**

(51) Int Cl.:
**G05B 23/02** *(2006.01)* **G06F 17/14** *(2006.01)*

(21) Application number: **16188782.3**

(22) Date of filing: **14.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft**
**80333 München (DE)**

(72) Inventors:
• **Faisal Aftab, Muhammad**
**7031 Trondheim (NO)**
• **Hovd, Morten**
**7058 Jakkobsli (NO)**
• **Sivalingam, Selvanathan**
**7044 Trondheim (NO)**

(54) **DETECTION OF PLANT WIDE OSCILLATIONS IN CONTROL VARIABLES FOR AN INDUSTRIAL PLANT CONTROL SYSTEM**

(57) There is described a method of detecting plant wide oscillations in control variables for an industrial plant control system, the method comprising (a) obtaining (105) a number of sample values for each of a plurality of control variables, (b) decomposing (110) each control variable into a number of components, (c) calculating (115) a correlation coefficient of each component and the corresponding control variable, (d) normalizing (120) each calculated correlation coefficient, (e) arranging (125) the normalized correlation coefficients in a correlation coefficient matrix, (f) identifying (130), for each row of the correlation coefficient matrix, the normalized correlation coefficients having a value equal to or above a first predetermined value, (g) assigning (135) the components corresponding to the identified normalized correlation coefficients within each row of the correlation coefficient matrix to a group corresponding to the row, (h) calculating (140) a sparseness index for the components in each group, and (i) transferring (145) the components with sparseness index below a second predetermined value to a further group, wherein each remaining group corresponds to an oscillation with a certain frequency. There is also described a control module for an industrial plant control system for performing the method, an industrial plant control system comprising such a control module, and a computer program.

FIG 1

100

```
Obtain sample values for control variables   ~105
                    ↓
Decompose control variables using MEMD        ~110
                    ↓
Calculate correlation coefficients            ~115
                    ↓
Normalize correlation coefficients            ~120
                    ↓
Arrange normalized correlation
coefficients in a correlation coefficient     ~125
matrix
                    ↓
Identify normalized correlation
coefficients ≥ η                              ~130
                    ↓
Group identified correlation coefficients     ~135
                    ↓
Calculate sparseness index for
components in each group                       ~140
                    ↓
Transfer components with sparseness
index < γ to further group                    ~145
                    ↓
Remove empty group(s)
and re-group                                   ~150
```

EP 3 296 829 A1

**Description**

Field of Invention

The present invention relates to the field of industrial plant control, in particular to methods of detecting plant wide oscillations in control variables for an industrial plant control system. The invention further relates to a control module for an industrial plant control system for performing the method, an industrial plant control system comprising such a control module, and to a computer program.

Art Background

Oscillating control variables is one of the major problems faced by industrial control systems since almost a third of all control loops are reported to be oscillatory. The oscillations may cause product variability and greatly impact the profitability of plant operations. In an interactive multi-loop environment, oscillations generated in one loop may propagate to other parts of the plant owing to underlying interactions and coupling effects.
There may thus be a need for identifying variables that oscillate due to a common cause. In particular, the capability of performing such identification may be very helpful in finding a root cause of a specific plant-wide oscillation, as there would be little reason for searching for a root cause among variables not affected by the oscillation in question.

Summary of the Invention

This need may be met by the subject matter according to the independent claims. Advantageous embodiments of the present invention are described by the dependent claims.
According to a first aspect of the invention, there is provided a method of detecting plant wide oscillations in control variables for an industrial plant control system. The described method comprises (a) obtaining a number of sample values for each of a plurality of control variables, (b) decomposing each control variable into a number of components, (c) calculating a correlation coefficient of each component and the corresponding control variable, (d) normalizing each calculated correlation coefficient, (e) arranging the normalized correlation coefficients in a correlation coefficient matrix, wherein each column of the normalized coefficient matrix corresponds to one of the control variables and each row of the normalized coefficient matrix corresponds to one of the components, (f) identifying, for each row of the correlation coefficient matrix, the normalized correlation coefficients having a value equal to or above a first predetermined value, (g) assigning the components corresponding to the identified normalized correlation coefficients within each row of the correlation coefficient matrix to a group corresponding to the row, (h) calculating a sparseness index for the components in each group, and (i) transferring the components with sparseness index below a second predetermined value to a further group, wherein each remaining group corresponds to an oscillation with a certain frequency.
This aspect of the invention is based on the idea that the control variables in question are decomposed into a number of components representing possible modes or oscillation frequencies based on a number of sample values for each of the control variables. The sample values are preferably obtained as measurement values with a predetermined sample frequency. The correlation between the components and the corresponding control variable is calculated, normalized and used to form a number of groups by comparing the normalized correlation coefficients with a first predetermined value. Any components within the groups having a sparseness index below a second predetermined value are transferred to a further group (that is not part of the previously mentioned number of groups). In the end, each remaining group corresponds to an oscillation with a certain frequency (corresponding to the particular component) such that the control variable or variables exhibiting this particular oscillation can be easily identified.
In the present context, the term "detecting plant wide oscillations in control variables" refers to (i) identifying oscillations and (ii) determining which variables are affected by each oscillation in a setting where each variable may be affected by multiple oscillations and each oscillation may affect multiple variables.
The method according to this aspect provides an automatic and adaptive method capable of plant wide oscillation detection without requiring any a priori assumption about the underlying plant dynamics. Furthermore, the method can handle data from both non-linear and non-stationary time series.
According to an embodiment of the invention, the components are orthogonal components, nearly orthogonal components or substantially orthogonal components.
According to a further embodiment of the invention, the step of decomposing each control variable into a number of components comprises applying multivariate empirical mode decomposition (MEMD) to the sample values of the plurality of control variables.
A detailed explanation of the MEMD technique can be found in the following publication: Naveed Rehman and Danilo P Mandic: "Multivariate empirical mode decomposition". In Proceedings of The Royal Society of London A: Mathematical, Physical and Engineering Sciences, page rspa20090502. The Royal Society, 2009.

In short, the decomposition using MEMD results in a total of N components $c_{ij}$, $i$=1,2,3...$N$, for each of J control variables.

According to a further embodiment of the invention, the multivariate empirical mode decomposition is applied to a signal matrix comprising a column corresponding to each control variable and a row corresponding to each sample value.

In other words, the signal matrix S representing a set of J variables with each variable having M samples will have the dimensions M*J (i.e. M rows and J columns). The signal matrix S may also be considered a representation of a multivariate signal.

According to a further embodiment of the invention, the step of calculating a correlation coefficient of each component and the corresponding control variable is performed using the formula

$$\rho_{ij} = \frac{Cov\left(c_{i_j}, x_j\right)}{\sigma_{x_j} \sigma_{c_{i_j}}}, \qquad i = 1, 2, 3 \ldots N,$$

wherein $Cov$ is the covariance of the $i^{th}$ component $c_{ij}$ and the $j^{th}$ control variable $x_j$, $\sigma_{x_j}$ is the standard deviation of the $j^{th}$ control variable $x_j$, $\sigma_{c_{ij}}$ is the standard deviation of the $i^{th}$ component $c_{ij}$, and N is the number of components.

According to a further embodiment of the invention, the step of normalizing each calculated correlation coefficient is performed using the formula

$$\lambda_{ij} = \frac{\rho_{ij}}{max_i(\rho_{ij})}, \qquad i = 1, 2, 3 \ldots N.$$

In other words, for each value of i between 1 and N, the normalized correlation coefficients are calculated by dividing each correlation coefficient by the maximum correlation coefficient for that particular value of i. Thus, for any value of i, the maximum value of the normalized correlation coefficients will be 1 (one).

According to a further embodiment of the invention, the step of calculating a sparseness index for the components in each group is performed using the formula

$$sparseness(c) = \frac{\sqrt{N} - \left(\sum |C_i| / \sqrt{\sum |C_i|^2}\right)}{\sqrt{N} - 1},$$

wherein $C_i$ denotes the frequency spectrum of component $c_i$ up to the Nyquist frequency.

According to a further embodiment of the invention, the method further comprises removing any group that is empty after the step of transferring the components with sparseness index below a second predetermined value to a further group.

In other words, if the step of transferring the components with sparseness index below the second predetermined value to the further group results in one or more empty groups, this (these) group(s) are removed.

According to a further embodiment of the invention, the method further comprises generating an output message comprising information identifying the groups and the control variables contained in each group.

The output message may accordingly be used by an operator or by another automatic system to obtain knowledge of the control variable(s) exhibiting oscillations, thereby allowing the recipient to investigate further, e.g. to determine a root cause, or to perform other relevant actions depending on the circumstances.

According to a second aspect of the invention, there is provided a control module for an industrial plant control system. The described control module comprises a processing unit adapted to perform the method according to the first aspect or any of the described embodiments.

The control module may be implemented in an industrial plant control system to allow the latter to benefit from the advantageous method according to the first aspect or any of the above embodiments.

According to a third aspect of the invention, there is provided an industrial plant control system. The described industrial plant control system comprises a control module according to the second aspect.

The industrial plant control system is capable of detecting oscillating control variables in the efficient and advantageous way provided by the method according to the first aspect or any of the above embodiments.

According to a fourth aspect of the invention, there is provided a computer program. The described computer program comprises computer executable instructions, which when executed by a processing unit of a computer are adapted to cause the computer to perform the method according to the first aspect or any of the described embodiments.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows a flowchart of a method of detecting plant wide oscillations in control variables for an industrial plant control system in accordance with an embodiment of the present invention.

Figure 2 shows a table indicating exemplary data for a method in accordance with an embodiment of the present invention.

Figure 3 shows a normalized correlation coefficient matrix generated in accordance with an embodiment of the present invention.

Figure 4 shows an illustration of control variables and corresponding decomposition into components using MEMD in accordance with an embodiment of the present invention.

Figure 5 shows a set of groups obtained in accordance with an embodiment of the present invention.

Figure 6 shows a set of remaining groups obtained in accordance with an embodiment of the present invention.

Detailed Description

The illustration in the drawing is schematic. It is noted that in different figures, similar or identical elements are provided with the same reference numerals or with reference numerals which differ only within the first digit.

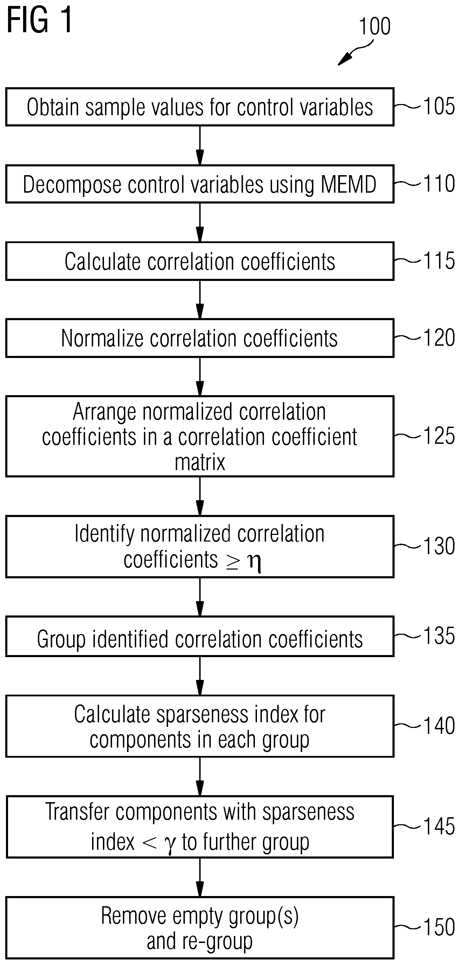

Figure 1 shows a flowchart 100 of a method of detecting plant wide oscillations in control variables for an industrial plant control system in accordance with an embodiment of the present invention. The method may in particular be carried out by the industrial plant control system, more specifically by a (hardware and/or software) module within the control system.

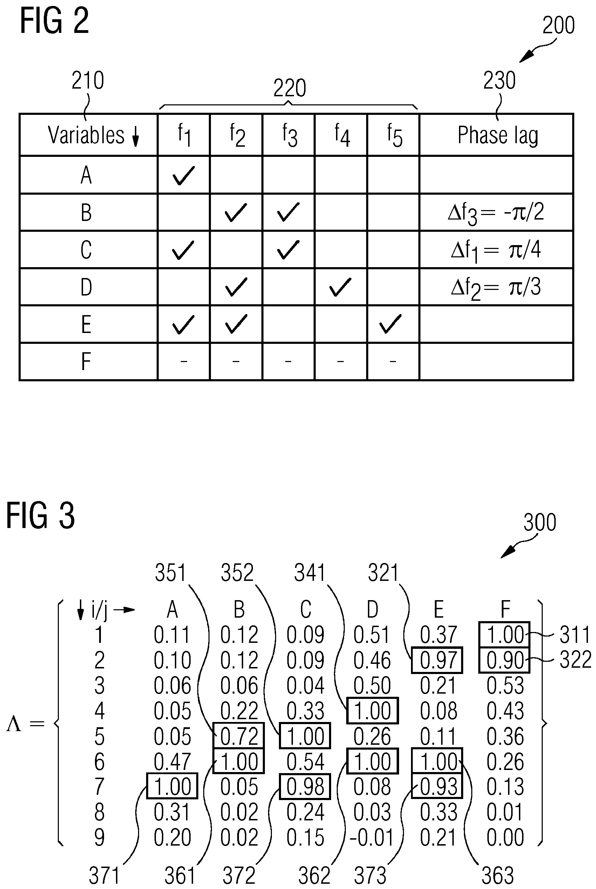

In the following, the method illustrated in the flowchart 100 of Figure 1 will be described with reference to Figures 2 to 6, which show various illustrations relating to various stages of the described method.

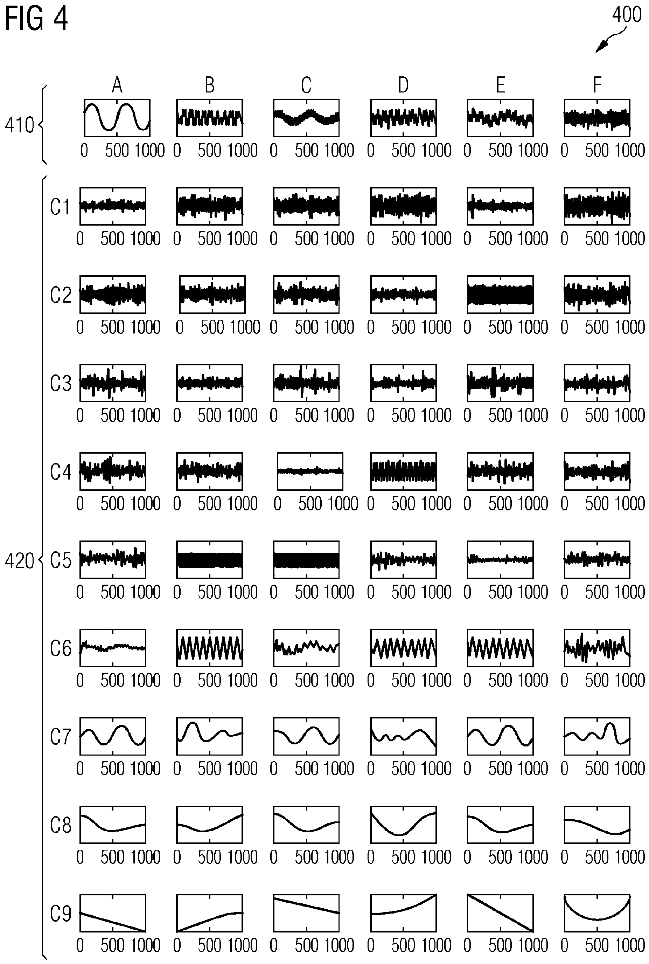

More specifically, the method 100 begins at 105, where a number of sample values are obtained for each of a plurality of control variables. In the illustration 400 of Figure 4, the upper row 410 shows exemplary sample values for each of six control variables A, B, C, D, E, and F. In the shown example, 1000 sample values are obtained for each control variable. More specifically, the specific values of control variables A, B, C, D, E, and F are simulation data containing five oscillatory modes (f1, f2, f3, f4, f5) with added random noise. As indicated in the table shown in Figure 2, the oscillatory mode f1 is present in A, C and E, the oscillatory mode f2 is present in B, D and E, the oscillatory mode f3 is present in B and C, the oscillatory mode f4 is present in D, and the oscillatory mode f5 is present in E. The control variable F contains random white noise only and no oscillatory mode. Furthermore, in order to illustrate the robustness of the method to phase shifts between different data channels, phase lags 230 are also incorporated (only non-zero phase lags are shown in Figure 2).

Returning to the method illustrated in Figure 1, at 110 the control variables are decomposed into a number of components, in particular nearly orthogonal components, preferably using multivariate empirical mode decomposition (MEMD). In the illustration 400 of Figure 4, nine components C1-C9 (collectively referred to as 420) are shown for each control signal A, B, C, D, E, and F.

Then, at 115, a correlation coefficient $\rho_{ij}$ of each component (i = 1, 2, 3, 4, 5, 6, 7, 8, 9 in the example of Figure 4) and the corresponding control variable (j = 1, 2, 3, 4, 5, 6 in the example of Figure 4, corresponding to the six control variables A, B, C, D, E, and F) is calculated, preferably using the formula

$$\rho_{ij} = \frac{Cov\left(c_{i_j}, x_j\right)}{\sigma_{x_j} \sigma_{c_{i_j}}}, \qquad i = 1, 2, 3 \ldots N.$$

At 120, each calculated correlation coefficient $\rho_{ij}$ is normalized, preferably using the formula

$$\lambda_{ij} = \frac{\tilde{n}_{ij}}{max_i(\rho_{ij})}, \qquad i = 1, 2, 3 \ldots N.$$

At 125, the normalized correlation coefficients $\lambda_{ij}$ are arranged in a correlation coefficient matrix $\Lambda$, wherein each column of the normalized coefficient matrix $\Lambda$ corresponds to one of the control variables and each row of the normalized coefficient matrix corresponds to one of the components. Figure 3 shows the correlation coefficient matrix 300 corresponding to the control variables 410 and components 420 in Figure 4. As shown in Figure 3, the matrix 300 contains nine rows (corresponding to the nine components C1-C9 in Figure 4) and six columns (corresponding to the six control variables A-F in Figure 4).

Having established the normalized correlation coefficient matrix $\Lambda$, the method continues at 130 with identifying, for each row of the correlation coefficient matrix, the normalized correlation coefficients having a value equal to or above a first predetermined value. In the example shown in Figure 3, the first predetermined value $\eta = 0.6$ and the corresponding identified correlation coefficients in each row are highlighted. More specifically, in the first row (i=1), the correlation coefficient 311 fulfills the condition. In the second row (i=2), the correlation coefficients 321 and 322 fulfill the condition. In the third row (i=3), no correlation coefficients fulfill the condition. In the fourth row (i=4), the correlation coefficient 341 fulfills the condition. In the fifth row (i=5), the correlation coefficients 351 and 352 fulfill the condition. In the sixth row (i=6), the correlation coefficients 361, 362 and 363 fulfill the condition. In the seventh row (i=7), the correlation coefficients 371, 372 and 373 fulfill the condition. In the eighth (i=8) and ninth (i=9) rows, no correlation coefficients fulfill the condition.

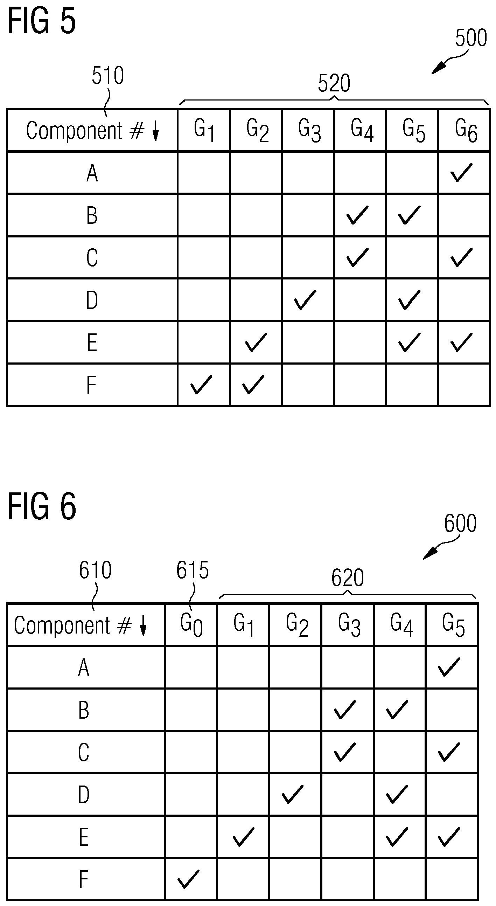

At 135, the components corresponding to the identified normalized correlation coefficients within each row of the correlation coefficient matrix are assigned to a group corresponding to the row. Figure 5 shows a table 500 illustrating a resulting (initial) set of Groups 520 ($G_1$ to $G_6$) with the variables A-F listed in the first column 510. More specifically, the first Group $G_1$ corresponds to the first row (i=1) of the matrix 300 in Figure 3 and contains a tick mark for the variable F, corresponding to highlighted correlation coefficient 311 in Figure 3. The second group $G_2$ corresponds to the second row (i=2) of the matrix 300 and contains tick marks for the variables E and F, corresponding to highlighted correlation coefficients 321 and 322 in Figure 3. The third group $G_3$ corresponds to the fourth row (i=4) of the matrix 300 (the third row of the matrix 300 did not contain any correlation coefficients fulfilling the condition) and contains a tick mark for the variable D, corresponding to the highlighted correlation coefficient 341 in Figure 3. The fourth group $G_4$ corresponds to the fifth row (i=5) of the matrix 300 and contains tick marks for the variables B and C, corresponding to highlighted correlation coefficients 351 and 352 in Figure 3. The fifth group $G_5$ corresponds to the sixth row (i=6) of the matrix 300 and contains tick marks for the variables B, D and E, corresponding to highlighted correlation coefficients 361, 362 and 363 in Figure 3. The sixth group $G_6$ corresponds to the seventh row (i=7) of the matrix 300 and contains tick marks for the variables A, C and E, corresponding to highlighted correlation coefficients 371, 372 and 373 in Figure 3.

Continuing the method 100 shown in Figure 1, a sparseness index for the components in each group is calculated at 140. More specifically, the sparseness is preferably calculated using the formula

$$sparseness(c) = \frac{\sqrt{N} - \left(\sum|C_i|/\sqrt{\sum|C_i|^2}\right)}{\sqrt{N} - 1},$$

wherein $C_i$ denotes the frequency spectrum of component $c_i$ up to the Nyquist frequency.

Then, at 145, the components with sparseness index below a second predetermined value are transferred to a further group, i.e. to a new group.

The table 600 shown in Figure 6 illustrates the remaining set of groups 620 and the further group 615 with the variables A-F listed in the first column 610. More specifically, the calculation of sparseness index for the initial groups $G_1$ to $G_6$ in Figure 5 revealed that the entries in initial Groups $G_1$ and $G_2$ corresponding to control variable F did not fulfill the condition of sparseness $\geq y$, $\gamma = 0.53$. Thus, these entries are transferred to the further group $G_0$. After the transfer, initial group $G_1$ in Figure 5 is empty and therefore removed. The remaining groups $G_2$ to $G_6$ are consolidated as $G_1$ to $G_5$ in the table 600 in Figure 6. However, in comparison to initial group $G_2$, the corresponding remaining group $G_1$ does not contain a tick mark for the control variable F as this entry has been transferred to further group $G_0$.

Now, each remaining group $G_1$ to $G_5$ corresponds to an oscillation with a certain frequency or a certain mode. As shown in Figure 6, $G_1$ and $G_2$ has one member each (control variable E respectively D), $G_3$ has two members (control variables B and C), and $G_4$ and $G_5$ each have three members (control variables B, D and E respectively A, C and E). Comparing with the table 200 in Figure 2, it can be seen that $G_1$ (containing control variable E) corresponds to mode $f_5$, $G_2$ (containing control variable D) corresponds to mode $f_4$, $G_3$ (containing control variables B and C) corresponds to mode $f_3$, $G_4$ (containing control variables B, D and E) corresponds to mode $f_2$, and $G_5$ (containing control variables A, C and E) corresponds to mode $f_1$. Also in accordance with table 200 in Figure 2, the control variable F (which contained random white noise only and oscillatory mode) is not a member of any of the remaining groups $G_1$ to $G_5$ in the table 600 in Figure 6. Instead, control variable F is a member of the further group $G_0$ which represents variables with random noise. If a variable has a large noise content along with an oscillatory mode, it will be refelcted in both $G_0$ (corresponding to noise) and another group depending on the oscillation frequency.

Summarizing, the method according to the above described exemplary embodiment of the present invention is seen to be capable of effectively detecting plant wide oscillations in control variables for an industrial plant. By obtaining the information on the groups $G_1$ to $G_5$, an operator or an automatic control system will be capable of not only identifying oscillations but also of carrying out an effective search for the root cause(s) based on the knowledge of shared modes/frequencies among more control variables.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1. A method of detecting plant wide oscillations in control variables for an industrial plant control system, the method comprising

   obtaining (105) a number of sample values for each of a plurality of control variables,

   decomposing (110) each control variable into a number of components,

   calculating (115) a correlation coefficient of each component and the corresponding control variable,

   normalizing (120) each calculated correlation coefficient,

   arranging (125) the normalized correlation coefficients in a correlation coefficient matrix, wherein each column of the normalized coefficient matrix corresponds to one of the control variables and each row of the normalized coefficient matrix corresponds to one of the components,

   identifying (130), for each row of the correlation coefficient matrix, the normalized correlation coefficients having a value equal to or above a first predetermined value,

   assigning (135) the components corresponding to the identified normalized correlation coefficients within each row of the correlation coefficient matrix to a group corresponding to the row,

   calculating (140) a sparseness index for the components in each group, and

   transferring (145) the components with sparseness index below a second predetermined value to a further group, wherein each remaining group corresponds to an oscillation with a certain frequency.

2. The method according to the preceding claim, wherein the components are orthogonal components, near orthogonal components or substantially orthogonal components.

3. The method according to any one of the preceding claims, wherein the step of decomposing each control variable into a number of components comprises applying multivariate empirical mode decomposition to the sample values of the plurality of control variables.

4. The method according to the preceding claim, wherein the multivariate empirical mode decomposition is applied to a signal matrix comprising a column corresponding to each control variable and a row corresponding to each sample value.

5. The method according to any of the preceding claims, wherein the step of calculating a correlation coefficient of each component and the corresponding control variable is performed using the formula

$$\rho_{ij} = \frac{Cov\left(c_{i_j}, x_j\right)}{\sigma_{x_j} \sigma_{c_{i_j}}}, \qquad i = 1, 2, 3 \ldots N,$$

wherein $Cov$ is the covariance of the $i^{th}$ component $c_{ij}$ and the $j^{th}$ control variable $x_j$, $\sigma_{x_j}$ is the standard deviation of the $j^{th}$ control variable $x_j$, $\sigma_{c_{ij}}$ is the standard deviation of the $i^{th}$ component $c_{ij}$, and N is the number of components.

6. The method according to the preceding claim, wherein the step of normalizing each calculated correlation coefficient is performed using the formula

$$\lambda_{ij} = \frac{\rho_{ij}}{max_i(\rho_{ij})}, \qquad i = 1, 2, 3 \ldots N.$$

7. The method according to any of the preceding claims, wherein the step of calculating a sparseness index for the components in each group is performed using the formula

$$sparseness(c) = \frac{\sqrt{N} - \left(\sum |C_i| / \sqrt{\sum |C_i|^2}\right)}{\sqrt{N} - 1},$$

wherein $C_i$ denotes the frequency spectrum of component $c_i$ up to the Nyquist frequency.

8. The method according to any of the preceding claims, further comprising removing (150) any group that is empty after the step of transferring the components with sparseness index below a second predetermined value to a further group.

9. The method according to any of the preceding claims, further comprising generating an output message comprising information identifying the groups and the control variables contained in each group.

10. A control module for an industrial plant control system, the control module comprising a processing unit adapted to perform the method according to any of the preceding claims.

11. An industrial plant control system comprising a control module according to the preceding claim.

12. A computer program comprising computer executable instructions, which when executed by a processing unit of a computer are adapted to cause the computer to perform the method according to any of claims 1 to 9.

# FIG 1

100

| Obtain sample values for control variables |~105

↓

| Decompose control variables using MEMD |~110

↓

| Calculate correlation coefficients |~115

↓

| Normalize correlation coefficients |~120

↓

| Arrange normalized correlation coefficients in a correlation coefficient matrix |~125

↓

| Identify normalized correlation coefficients $\geq \eta$ |~130

↓

| Group identified correlation coefficients |~135

↓

| Calculate sparseness index for components in each group |~140

↓

| Transfer components with sparseness index $< \gamma$ to further group |~145

↓

| Remove empty group(s) and re-group |~150

# FIG 2

210    220    230    200

| Variables ↓ | f$_1$ | f$_2$ | f$_3$ | f$_4$ | f$_5$ | Phase lag |
|---|---|---|---|---|---|---|
| A | ✓ | | | | | |
| B | | ✓ | ✓ | | | $\Delta f_3 = -\pi/2$ |
| C | ✓ | | ✓ | | | $\Delta f_1 = \pi/4$ |
| D | | ✓ | | ✓ | | $\Delta f_2 = \pi/3$ |
| E | ✓ | ✓ | | | ✓ | |
| F | - | - | - | - | - | |

# FIG 3

300

$$\Lambda = \left\{ \begin{array}{ccccccc}
\downarrow i/j \rightarrow & A & B & C & D & E & F \\
1 & 0.11 & 0.12 & 0.09 & 0.51 & 0.37 & \boxed{1.00} \\
2 & 0.10 & 0.12 & 0.09 & 0.46 & \boxed{0.97} & \boxed{0.90} \\
3 & 0.06 & 0.06 & 0.04 & 0.50 & 0.21 & 0.53 \\
4 & 0.05 & 0.22 & 0.33 & \boxed{1.00} & 0.08 & 0.43 \\
5 & 0.05 & \boxed{0.72} & \boxed{1.00} & 0.26 & 0.11 & 0.36 \\
6 & 0.47 & \boxed{1.00} & 0.54 & \boxed{1.00} & \boxed{1.00} & 0.26 \\
7 & \boxed{1.00} & 0.05 & \boxed{0.98} & 0.08 & \boxed{0.93} & 0.13 \\
8 & 0.31 & 0.02 & 0.24 & 0.03 & 0.33 & 0.01 \\
9 & 0.20 & 0.02 & 0.15 & -0.01 & 0.21 & 0.00
\end{array} \right\}$$

351  352  341  321  311  322

371  361  372  362  373  363

## FIG 4

400

FIG 5

500

510

520

| Component # ↓ | $G_1$ | $G_2$ | $G_3$ | $G_4$ | $G_5$ | $G_6$ |
|---|---|---|---|---|---|---|
| A | | | | | | ✓ |
| B | | | | ✓ | ✓ | |
| C | | | | ✓ | | ✓ |
| D | | | ✓ | | ✓ | |
| E | | ✓ | | | ✓ | ✓ |
| F | ✓ | ✓ | | | | |

FIG 6

600

610    615         620

| Component # ↓ | $G_0$ | $G_1$ | $G_2$ | $G_3$ | $G_4$ | $G_5$ |
|---|---|---|---|---|---|---|
| A | | | | | | ✓ |
| B | | | | ✓ | ✓ | |
| C | | | | ✓ | | ✓ |
| D | | | ✓ | | ✓ | |
| E | | ✓ | | | ✓ | ✓ |
| F | ✓ | | | | | |

Europäisches
Patentamt

European
Patent Office

Office européen
des brevets

## EUROPEAN SEARCH REPORT

Application Number

EP 16 18 8782

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LOONEY DAVID ET AL: "Subspace denoising of EEG artefacts via multivariate EMD", 2014 IEEE INTERNATIONAL CONFERENCE ON ACOUSTICS, SPEECH AND SIGNAL PROCESSING (ICASSP), IEEE, 4 May 2014 (2014-05-04), pages 4688-4692, XP032617610, DOI: 10.1109/ICASSP.2014.6854491 [retrieved on 2014-07-11] * the whole document * | 1-12 | INV. G05B23/02 G06F17/14 |
| A | NAVEED UR REHMAN ET AL: "Filter Bank Property of Multivariate Empirical Mode Decomposition", IEEE TRANSACTIONS ON SIGNAL PROCESSING, IEEE SERVICE CENTER, NEW YORK, NY, US, vol. 59, no. 5, 1 May 2011 (2011-05-01), pages 2421-2426, XP011353086, ISSN: 1053-587X, DOI: 10.1109/TSP.2011.2106779 * the whole document * | 1-12 | |

TECHNICAL FIELDS
SEARCHED (IPC)

G05B
G06F

The present search report has been drawn up for all claims

| Place of search | Date of completion of the search | Examiner |
|---|---|---|
| Munich | 16 December 2016 | Barriuso Poy, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)